Europäisches Patentamt

European Patent Office

Office européen des brevets

(19)

(11) Publication number: **0 041 997**
**B1**

# (12) EUROPEAN PATENT SPECIFICATION

(45) Date of publication of patent specification: **11.05.88**

(51) Int. Cl.⁴: **B 66 D 1/36**

(21) Application number: **81900179.3**

(22) Date of filing: **10.12.80**

(86) International application number:
**PCT/US80/01641**

(87) International publication number:
**WO 81/01698 25.06.81 Gazette 81/15**

## (54) APPARATUS AND METHODS FOR LINE STRINGING WITH LOAD PICKUP COUPLING DEVICE.

(30) Priority: **13.12.79 US 103348**
**30.05.80 US 154878**

(43) Date of publication of application:
**23.12.81 Bulletin 81/51**

(45) Publication of the grant of the patent:
**11.05.88 Bulletin 88/19**

(84) Designated Contracting States:
**AT CH FR GB LI NL SE**

(56) References cited:
**US-A-4 006 884**
**US-A-4 124 181**
**US-A-4 170 341**
**US-A-4 247 084**
**US-A-4 278 237**

(73) Proprietor: **CHAPMAN, Claude Louis**
**3300 West Union**
**Englewood, CO 80110 (US)**

(72) Inventor: **CHAPMAN, Claude Louis**
**3300 West Union**
**Englewood, CO 80110 (US)**

(74) Representative: **Parker, Jeffrey et al**
**Frank B. Dehn & Co. Imperial House 15-19**
**Kingsway**
**London, WC2B 6UZ (GB)**

Courier Press, Leamington Spa, England.

## Description

This invention relates to a method and apparatus for stringing lines such as electric power lines.

The advantages of stringing electric power lines by helicopter or the like are well known. In general for airborne stringing of power lines the practice has been to provide blocks on the support towers through which the personnel in the helicopter can readily string the power line. There are, however, a number of towers presently in use and designed for future use wherein a centre power line is entirely closed on all sides at the point of attachment and this, of course, poses particular problems for stringing by helicopter or the like.

There is known from US—A—4,006,884 a method of stringing a line through a series of towers each having a longitudinally facing opening, without the need for sideways access to the opening, said method including suspending the line from an aircraft by means including a hoist line, advancing the aircraft and line to a tower, supporting the line adjacent one side of the opening of said tower, pulling the line through the opening by means of a threading element passing through the opening and joined to the hoist line and to the line while supported on said one side, such pulling of the line being achieved by disconnecting support from the hoist line on said one side of the tower and reconnecting such support on the other side of the tower, and advancing the aircraft to the next tower and repeating the operation for such next tower and successive towers.

In the line stringing method known from US—A—4,006,884, a threading element in the form of a short cable loop is pre-threaded through each tower opening and coupled to the tower. A hoist line suspended from an aircraft is joined, by means of a coupling device, to the cable loop on one side of the opening, and the line is then split and coupled to the other end of the loop such that the loop becomes interconnected with the hoist line whereby threading of the line through the opening is effectively achieved.

A disadvantage with this method is that the towers require special adaptation to accommodate coupling means for the cable loops and moreover the necessary prelocation and coupling of a loop to each tower before the threading operation is time-consuming and inconvenient.

The present invention is characterised in that the line is carried by threading means movable in its entirety with the line between successive towers whilst suspended from the aircraft by means including the hoist line, the threading means including the threading element which is rigid and is adapted to be pushed through the opening in the towers, wherein the line is supported on said one side of a tower by the threading means, and the line is pulled through the opening in the direction of stringing by means of the threading element whilst the threading means is suspended from the aircraft by means of the hoist line.

Thus in accordance with the invention the threading element is rigid and forms part of threading means suspended from the hoist line and moved from tower to tower. The above mentioned disadvantages associated with the method of U.S.—A—4,006,884 may thus be avoided.

Preferably, the method of the present invention is further characterised in that the disconnection of support from the hoist line on said one side of the tower is achieved by disconnecting the hoist line from the threading means whilst the threading means is supported independently of the hoist line and aircraft. In such a method, preferably the threading means comprises the threading element and means thereon releasably connectable to the hoist line, the threading means with the line carried thereby is presented to a tower on one side thereof whilst suspended from the aircraft by the hoist line connected to the threading element, the threading means is supported on the tower with the threading element extending through the opening to the other side of the tower, the hoist line is disconnected from the threading element, moved to the other side of the tower and reconnected to the threading element, and the threading means and line are pulled through the opening.

The invention also extends to apparatus exclusively for carrying out the method above described, comprising a threading element in the form of an elongate rigid member, fastening means for attaching a hoist line carried by an aircraft to said member including first and second hoist line fasteners spaced from one another on said member for releasably connecting said member to the lower end of said hoist line, and catch means on said member for releasably engaging portions of a tower to catch hold of and secure said member to the tower after said hoist line is released from said member.

Preferably the catch means comprises first and second tower catches, generally in the form of hooks, the first hoist line fastener being in front of the first tower catch and the second hoist line fastener being in front of the second tower catch.

Another preferred feature is that the hoist line fasteners comprise a front coupling device and a rear coupling device, and said catch means comprises a front tower catch towards the front end of said elongate member and a rear tower catch on said member between said first and second coupling devices, said coupling devices and tower catches being releasably clamped to said member and thereby adapted to be rotated to any angular position and located at a selected position along said member.

Some embodiments of the invention will now be described by way of example and with reference to the accompanying drawings in which:—

Fig. 1 is a perspective view of a helicopter supporting stringing apparatus for stringing a line to towers;

Fig. 2 is a top plan view of the stringing apparatus shown in Fig. 1;

Fig. 3 is a sectional view taken along lines 3—3 of Fig. 2;

Fig. 4 is a side elevational view of an alternative embodiment of the stringing apparatus;

Fig. 5 is a top plan view of another form of line stringing apparatus;

Fig. 6 is a side elevation view of the apparatus shown in Figure 5;

Fig. 7 is an enlarged sectional view taken along lines 7—7 of Figure 5;

Fig. 8 is a side elevation view of another arrangement for the front coupling device and front catch;

Fig. 9 is a sectional view taken along lines 9—9 of Figure 5 with alternative positions for the rear catch shown in dashed lines;

Fig. 10 is a top plan view of a coupling device suitable for use with the present invention;

Fig. 11 is a side elevation view of the coupling device shown in Figure 10;

Fig. 12 is an enlarged and elevation view of a portion of the coupling device shown in Figure 10 with the pivot member upright;

Fig. 13 is an enlarged side elevational view of the pivot assembly of Figure 12;

Fig. 14 is a sectional view taken along lines 14—14 of Figure 12;

Fig. 15 is a pictorial view of the deployment of a helicopter with a hoist line having an end member on the lower end for engaging the coupling device shown in Figure 10;

Fig. 16 is a pictorial view of a load being carried by the helicopter via the coupling device; and

Fig. 17 is a pictorial view of the load in a ground-supported position prior to release of the end member and hoist line from the coupling device;

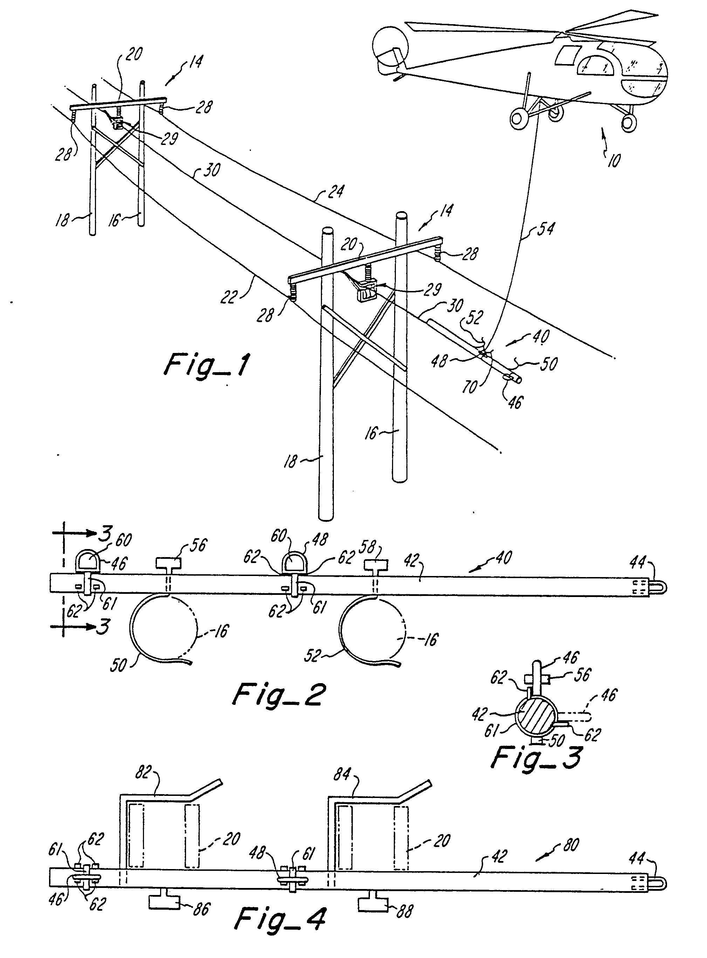

Referring now to Fig. 1, a helicopter 10 is shown stringing a line 30 to a series of towers 14 disposed at spaced intervals. The towers 14 are conventional high-tension towers having a pair of laterally spaced vertical poles 16 and 18 that are anchored to the ground and a cross support 20 attached at the top of the vertical poles 16 and 18 for supporting the strands of the high tension power line. The towers 14 are illustrated as having generally cylindrically shaped poles 16 and 18 and a generally rectangularly shaped cross support 20. It is understood that the apparatus and method of the invention may be used with a variety of types of towers and only one pole instead of two may be used per tower.

As illustrated, the cross supports 20 of the towers 14 are adapted to support three strands of high tension electric power line. Two outside strands 22 and 24 are shown and a procedure for stringing the centre or middle strand is described herein. The outside power line strands 22 and 24 are attached to the cross support 20 by means of a conventional electric insulator 28, as will be the middle strand of power line upon completion of the installation. In practice, a stringing block 29 or like line-holding structure is mounted on the lower end of each insulator 28 to facilitate the stringing operation. Blocks of this type are disclosed in U.S.—A—4,129,287 and U.S.—A—3,195,862.

For installing the centre strand of power line, a preliminary stringing line commonly known as, and herein referred to as, a line 30 is unrolled continuously from a large spool supported on the ground at one end of the series of towers being strung, using the stringing method and apparatus of the present invention. The line 30 is strung the entire length of the series of towers and has an end coupling that is then connected to an end of the centre strand of power line.

A winch-type puller on the ground is used to pull the line 30 back to its original position and thereby threads the power line connected thereto through the line-holding structure that had previously been occupied by the line 30. During the threading of the power line through the line holding structure it is maintained in tension by conventional tensioner apparatus on the ground.

While it is understood that the method and apparatus of the present invention are suitable for directly stringing at least relatively short lengths of power line, the weight of a typical length of power line would be too great for lifting by the aircraft. In addition, power line or other electrical conductors are vulnerable to cuts and scratches. The line 30 is considerably lighter and more durable and typically is in the nature of a stranded cable made of strong, lightweight materials such as steel, nylon, polyethylene and the like.

A needle-type stringing apparatus 40 shown in Figs. 1 and 2, comrpises a support member 42 in the form of an elongate cylindrically shaped rod, a generally U-shaped sock line fastener 44 attached at the rear end of support member 42, a front hoist line fastener 46 attached at the front end portion of the support member 42, and a rear hoist line fastener 48 attached to the support member a selected distance rearwardly of fastener 46, intermediate fastener 44 and fastener 46, for attaching the stringing apparatus 40 to a hoist line 54 depending from the helicopter 10 or like aircraft. A front hook-shaped tower catch 50 is mounted on support member 2 behind fastener 46 and a rear hook-shaped tower catch 52 is mounted on member 42 rearwardly of fastener 48. Catch 50 is disposed between fasteners 46 and 48. The function of catches 50 and 52 is to catch hold of, and temporarily secure the stringing apparatus to, the vertical pole 16 of the support tower as the tension in the line 30 pulls one of the catches 50 or 52 against the support tower, so as to support the sock line after the member 42 has been partially threaded through the tower 14.

Counterweights 56 and 58 are shown mounted on support member 42 directly opposite catches 50 and 52, respectively, to counterbalance the associated catches so as to ensure that the catches are disposed in a horizontal plane, and not turned at an angle, so as to readily catch the tower pole 16.

The line fasteners 46 and 48, respectively, are thus located axially in front of catches 50 and 52, respectively. Each line fastener 46 and 48 includes a generally U-shaped eyelet or lug portion 60 on a ring-shaped base portion 61 that in turn is rotatably mounted on support member 42. Stops 62 are provided for each fastener 46 and 48 and are attached to the support member 42 on either side of the body to limit the axial movement of the fasteners with respect to the support member and also to limit the rotational movement of the fasteners to 90° with respect to the support member so that each lug portion will rotate between a horizontal position ready for being hooked and a vertical position when it is hooked and carried by the hoist line.

The catches 50 and 52 are located opposite the lug portions 60 when the lug portions are in the horizontal position ready for being hooked. After hooking, the lugs swing to the vertical position at right angles to the catches so that the catches remain horizontal and can catch hold of the sides of vertical poles.

As shown in Fig. 1, a grappling hook 70 or similar device is attached to the hoist line 54 for releasably attaching the hoist line 54 to the fasteners 46 and 48 of the needle-type stringing apparatus 40.

The stringing apparatus 40 is used to string the sock line through the series of tower supports 14 by a method that includes the steps of pulling the stringing apparatus 40 with the sock line 30 attached thereto between the towers 14 with the hoist line 54 of the helicopter 10, supporting the stringing apparatus 40 on a tower 14 while the stringing apparatus 40 is released from the hoist line 54, flying the helicopter 10 and hoist line 54 around the tower 14, reattaching the hoist line 54 to the stringing apparatus 40 on the opposite side of the tower 14, and then pulling the stringing apparatus 40 and line 30 through the tower 14. Finally, after the sock line has been strung through all of the towers, one end is secured to the power line and the power line is threaded through the support structure to replace the sock line.

More specifically, the method is preferably carried out by first fastening the line 30 to sock line fastener 44. A grappling hook 70 on the helicopter hoist line 54 is attached to the rear hoist line fastener 48 for pulling the stringing apparatus through the air. The airborne stringing apparatus is then pushed partially through the tower 14 and the leading tower catch 50 of the apparatus is hooked around support pole 16 on the tower 14. The tension on the sock line 30 helps to maintain the stringing apparatus 40 in position on the pole 16.

The hoist line 54 is then released from the rear fastener 48 and the helicopter flies the hoist line 54 around to the opposite side of the tower 14. The hoist line 54 is then reattached to the front hoist line fastener 46 and the helicopter 10 pulls the stringing apparatus 40 through the tower 14 and hooks catch 52 to the tower pole 16. The hoist line 54 is then released from front hoist line fastener 46 and is reattached to rear hoist line fastener 48. The stringing apparatus 40 can then be pulled through the tower 14 by the aircraft and the operation can be repeated at the next tower.

Referring now to Fig. 3, another embodiment of the needle-type stringing apparatus is shown and is generally designated 80. Apparatus 80 is formed with generally open square-shaped front and rear tower catches 82 and 84. The catches are respectively associated with the front and rear hoist line fasteners 46 and 48. The lug portions of the line fasteners can again move between horizontal and vertical positions but in this embodiment the catches 82 and 84 remain in the vertical position so that the catches will catch hold of the cross support 20 of the tower. Counterweights 86 and 88 are shown mounted on support member 42 directly opposite catches 82 and 84, respectively, to counterbalance the associated catches. The lug portions of the line fasteners swing 90° from the horizontal to the vertical position when supported by the hoist line. This arrangement functions in the same manner as previously described except that during operation of the apparatus the square-shaped tower catches 82 and 84 are used to support the apparatus on the generally rectangularly shaped cross support member 20 of the tower 14 rather than on the vertical tower poles 16 and 18.

The line stringing apparatus 571 shown in Figures 5 to 9 includes a support member 572 in the form of an elongate cylindrically shaped rod, a front hoist line fastener or coupling device 515a attached to the front end of the support member 572, and a rear hoist line fastener or coupling device 515b attached to the support member 572 between the ends thereof a selected distance behind coupling device 515a.

The stringing apparatus further has a front tower catch 575 disposed adjacent to but rearwardly of the front coupling device 515a and a rear tower catch 576 disposed forwardly of the rear coupling device 515b. A line fastener 578 is connected to the rear end of the support member for fastening a sock or pull line 579 to the support member 571. The line fastener 578 has a mounting bracket clamped to the support member 571 and a clevis held by the fastening bolts. The sock line 579 is secured to the clevis.

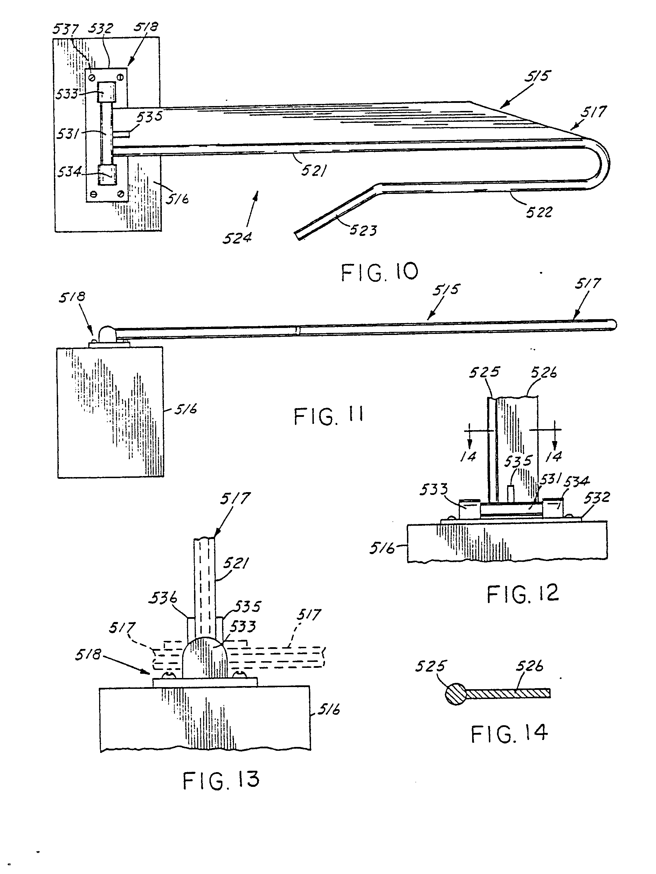

Coupling devices 515a and 515b are of a construction similar to device 515 hereinafter described in detail with reference to Figs. 10 and 14 and differ from one another only in the relative proportions of the shank portion and retainer portions. The front coupling device is shorter for added strength. As shown in Figure 7, each of these coupling devices 515a and 515b has a pipe-clamp-type circular mounting bracket 581 that fits around the support member 572 and has flange plates 582 and 583 through which one or more bolt fasteners 584 pass to releasably clamp the coupling device to the support member at the desired position. This allows the member to be located at any position along the support member and be adjustably moved as required.

A pivoted member 517 mounted on bracket 581 by means of a pivot rod 531 carries a stop 586 to hold it in the horizontal position and a stop 587 to hold it in the upright position. Stop 587 can be designed to hold member 517 at any desired angular position in between. For some applications the stops could enable the pivot member to swing a full 180°, as is shown in Figure 13.

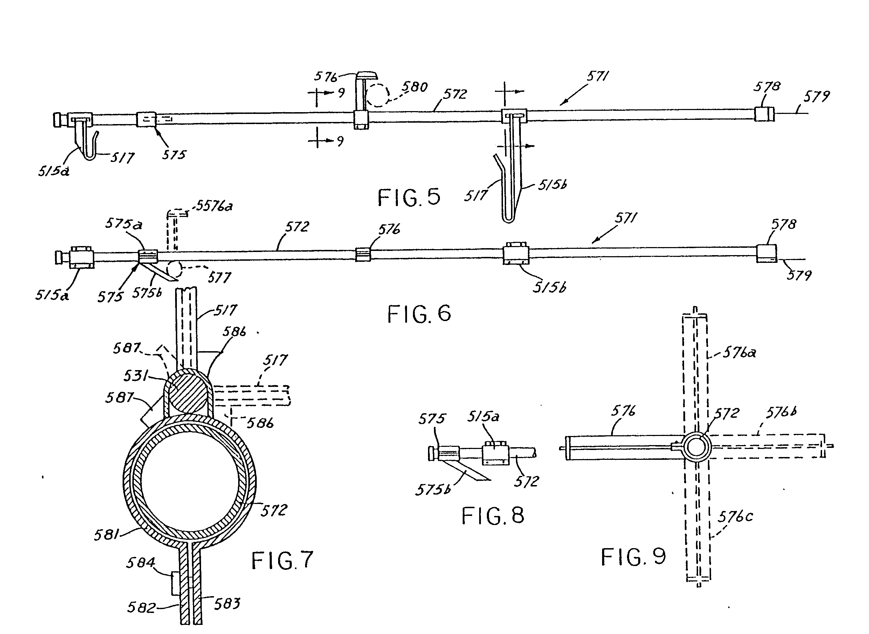

The front tower catch 575 includes a releasable and slidable mounting bracket portion 575a similar to bracket 581 above described to permit this catch to be slidable along the support member 572 and located at a selected position by tightening bolt fasteners that extend through flanges of the bracket. The catch 575 also includes a rearwardly and downwardly inclined hooking arm portion 575b adapted to hook over the top of a cross support on a tower, designated by dashed lines at 577. The front tower catch 575 may also be located forwardly of the front coupling device 515a, as shown in Figure 8.

The rear tower catch 576 includes a releasable and slidable mounting bracket portion similar to bracket 581 above described and has an outwardly and rearwardly extending arm portion provided with flat surfaces that are particularly suited for engaging wood. The rear tower catch 576 shown in Figures 5 and 9 extends laterally out from one side of the support member 572 opposite the horizontal positions for the pivot members 517 and is positioned for a side hookup with a upright side pole of a support tower, indicated at 580.

The rear tower catch 576 may be disposed on the opposite side at 576b, on top as indicated at 576a, or on the bottom as indicated at 575c, with respect to the support member, as shown in dashed lines in Figure 9, depending on the type of tower engagement or hookup required. An upstanding or top position indicated at 576a with the rear catch located forwardly and adjacent the front catch 575, as shown in dashed lines in Figure 6, is particularly suited for having the catch engage the under side or bottom of a cross support 577 on a tower.

Referring now to Figues 10—14 of the drawings, a load pickup coupling device 515 is shown and is generally identical to devices 515a and 515b mounted on the member 572. For the purposes of explanation only, device 515 is shown attached to a block 516 but the construction and operation otherwise apply to devices 515a and 515b. This coupling device 515, generally stated, has a single hook-shaped pivotal member 517 pivotally connected at one end to the top of the load by a pivot assembly 518 to pivot about a substantially horizontal axis between selected positions described hereinafter.

The pivotal member 517 shown comprises a shank portion 521 and a U-shaped retainer portion 522 with an outwardly flared end portion 523 opposite pivot assembly 518, which define an interior receiving area with a receiving opening 524 for the line along one side opposite the shank portion and between the end of the end portion 523 and the load. This configuration for the pivotal member and the fact that it is disposed substantially on its side in a prone position as shown in Figure 10 provides a load-supported, line-engaging target area for an end member 543 on hoist line 542.

In practice the hoist line 542 and end member 543 are moved by aircraft 541 and engage the pivotal member 517 so that its external edge assists in guiding the hoist line toward the opening in the hook between the flared end portion and the load. The outwardly flared end portion facilitates guiding of the hoist line into the opening in the hook and against the inner edge of the shank portion, which then serves as a line-engaging target area for the hoist line and guides the hoist line into the retainer portion 522. The retainer portion 522 is larger than the cross section of the hoist line and smaller than the cross section of the end member 543 carried by the hoist line. Once carried by the hoist line, the pivotal member 517 and its pivotal connection at the assembly 518 become load-bearing or load-supporting members between the hoist line and load.

The pivotal member 517 shown is made of a solid rod 525 of circular cross section with a reinforcing plate 526 that extends along the shank portion and one side of the retainer portion for added strength.

The pivot assembly 518 for the pivotal member 517 includes a transverse pivot rod 531 fixed to the end of the shank portion opposite the retainer portion and adapted to rotate about a horizontal axis, together with a mounting plate 532 which carries a pair of sleeve bearings 533 and 534 fixed thereto. The pivot rod 531 is telescopically received in, and retained at opposite ends by, the sleeve bearings 533 and 534.

A horizontal stop 535 is carried by the shank portion 521 of pivotal member 517 and engages the mounting plate 532 to hold the pivot member 517 in the horizontal position on one side, and a horizontal stop 536 is mounted on the opposite side of the pivot member to hold the pivot in a horizontal position when swung to an opposite position as shown in dashed lines. It is understood that the stops 535 and 536 may be shaped to position the pivot member at an upward incline to the horizontal if desired, but in most cases this angle would be small and would not exceed 45°. Screw fasteners 537 are shown holding the mounting plate to the load. While a mounting plate is shown, it is understood that other fastening techniques may be used to fasten the pivot assembly 518 to the load and other forms of pivots may be used to pivotally mount the pivot member 517 to a load. In particular, reference is made to the use of the bracket 581 described in connection with the preceding embodiment.

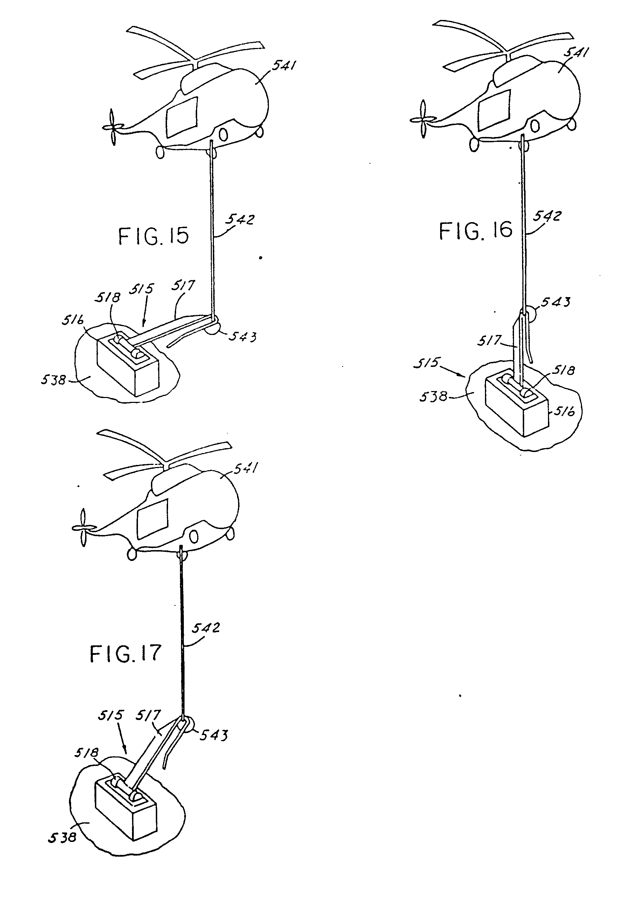

Referring now to Figures 15—17, the load 516 with the coupling device 515 mounted thereon, as above described, is shown on a supporting surface 538. The helicopter-type aircraft 541 has hoist line 542 suspended thereon with the end member 543 in the form of a ball forming a weight on the lower end. Shapes other than spherical could be used.

The helicopter positions the end member 543 below the pivot member and the line 52 is moved towards the shank portion 521 through the receiving opening 524, usually against the inner edge of the shank portion wherein it is guided thereby into the retainer portion 522. The end member 543 is then raised against the retainer portion and at the same time the pivot member swings up about the pivot and forms a connection between the load and the helicopter so that the helicopter may lift the load, as shown in Figure 16.

To release the load from the hoist line, upon the placement of the load on a support surface the pivot member will tend to swing in the direction of the end member 543 and lie back down to the horizontal position, whereupon the end member 543 may be slid from the retainer portion and out of the receiving opening of the hook in the opposite direction to that of its insertion.

The above teaching will now be described in relation to stringing a sock line through the line-holding structure of a tower that has no side access, such as the centre line, using the line stringing apparatus 571 described earlier.

Firstly, the end member or ball 543 on the end of the hoist line is placed in the front coupling device 515a and the line stringing apparatus 571 is moved by the aircraft and set on the top of the cross support 577 of the tower or other support structure with arm portion 575b hooked on support 577 and the sock line 579 providing tension to hold apparatus 571 in place. The line and end member are removed from the front coupling device 515a and connected to the rear coupling device 515b, which is the loaded position ready for threading.

The line stringing apparatus 571 is then lifted off the tower, backed up and threaded through the tower by manipulating the aircraft. The top front catch 576a then hooks the cross support of the tower or alternatively a side mounted front catch may hook the side of the tower, according to the type of tower, and the stringing apparatus is again supported by the tower. The end member 543 is decoupled from the rear coupling device 515b and hooked into the front coupling device 515a and the line 579 is threaded completely through the tower and moved down to the next tower by the aircraft, where the front catch is again set on the top cross support 577 and the above procedure is repeated.

Reference is made to copending European Application EP—A—0167041 which is divided herefrom and which describes and claims a coupling device and a method of using the same for use with the method and apparatus disclosed herein.

**Claims**

1. A method of stringing a line (30) through a series of towers (14) each having a longitudinally facing opening, without the need for sideways access to the opening, said method including suspending the line (30) from an aircraft (10) by means including a hoist line (54), advancing the aircraft (10) and line (30) to a tower, supporting the line adjacent one side of the opening of said tower (14), pulling the line (30) through the opening by means of a threading element (42; 572) passing through the opening and joined to the hoist line (54) and to the line (30) while supported on said one side, such pulling of the line (30) being achieved by disconnecting support from the hoist line (54) on said one side of the tower (14) and reconnecting such support on the other side of the tower, and advancing the aircraft (10) to the next tower (14) and repeating the operation for such next tower and successive towers, characterised in that the line (30) is carried by threading means (40; 80; 571) movable in its entirety with the line (30) between successive towers (14) whilst suspended from the aircraft (10) by means including the hoist line (54), the threading means including the threading element (42; 572) which is rigid and is adapted to be pushed through the opening in the towers, wherein the line (30) is supported on said one side of a tower (14) by the threading means (40; 80; 571), and the line (30) is pulled through the opening in the direction of stringing by means of the threading element (42; 572) whilst the threading means (40; 80; 571) is suspended from the aircraft (10) by means of the hoist line (54).

2. A method as claimed in claim 1 characterised in that the disconnection of support from the hoist line (54) on said one side of the tower (14) is achieved by disconnecting the hoist line (54) from the threading means (40; 80; 571) whilst the threading means is supported independently of the hoist line (54) and aircraft (10).

3. A method as claimed in claim 2, characterised in that the threading means (40; 80; 571) comprises the threading element (42; 572) and means (46, 48; 515a, 515b) thereon releasably connectable to the hoist line (54), the threading means with the line (30) carried thereby is presented to a tower (14) on one side thereof whilst suspended from the aircraft (10) by the hoist line (54) connected to the threading element (42; 572), the threading means (40; 80; 571) is supported on the tower (14) with the threading element (42; 572) extending through the opening to the other side of the tower, the hoist line (54) is disconnected from the threading element, moved to the other side of the tower and reconnected to the threading element, and the threading means (40; 80; 571) and line (30) are pulled through the opening.

4. A method as claimed in claim 3 characterised in that the threading element (42; 572) is elongate and is provided with catches (50, 52; 82, 84; 575, 576) adapted to engage the tower (14) whereby the threading element may be secured thereto while said hoist line (54) is released from the threading element.

5. A method as claimed in claim 4 characterised by coupling the hoist line (54) to the threading element (572) at the forward end thereof; positioning the threading element (572) on a tower (14) using a front tower catch (575) thereof and tension on the line (30) to hold the threading element on the tower; releasing the hoist line (54) from said forward end of the threading element (572) and recoupling it to the threading element at an intermediate position thereof rearwardly of the front tower catch (575); detaching the threading element (572) from the tower (14); partially threading the threading element (572) through the tower opening and engaging a rear tower catch (576) thereof with the tower (14); decoupling the hoist line (54) from the intermediate position on the threading element (572) and recoupling it to the forward end thereof, and pulling the threading element (572) and line (30) through the tower opening.

6. A method as claimed in claim 4 characterised by coupling the hoist line (54) to the threading element (42) at an intermediate position thereof; partially threading the threading element (42) through the tower opening and engaging a front tower catch (50; 82) thereof with the tower (14); releasing the hoist line (54) from the intermediate position of the threading element (42) and recoupling it to the threading element at the forward end thereof; threading the threading element (42) further through the opening and engaging a rear tower catch (52; 84) thereof with the tower (14); decoupling the hoist line (54) from the forward end of the threading element (42) and recoupling it at the intermediate position thereof; and pulling the threading element (42) through the tower opening.

7. Apparatus exclusively for carrying out the method of any preceding claim comprising a threading element in the form of an elongate rigid member (42; 572), fastening means for attaching a hoist line (54) carried by an aircraft (10) to said member (42; 572) including first and second hoist line fasteners (46, 48; 515a, 515b) spaced from one another on said member (42; 572) for releasably connecting said member to the lower end of said hoist line (54), and catch means (50, 52; 82, 84; 575, 576) on said member (42, 572) for releasably engaging portions of a tower (14) to catch hold of and secure said member to the tower after said hoist line (54) is released from said member.

8. Apparatus as claimed in claim 7 characterised in that each of said hoist line fasteners (46, 48) has a lug portion (60) on a ring-shaped base portion (61) rotatably mounted on said elongate member (42) to move between a horizontal position and a vertical position and further including stops (62) on said member to limit the rotational movement of said base portion (61) between said positions.

9. Apparatus as claimed in claim 8 characterised in that said catch means (50, 52) extend substantially horizontally when said lug portions (60) are in their vertical position whereby the catches are adapted for engagement with a vertical tower portion (16).

10. Apparatus as claimed in claim 8 characterised in that said catch means (82, 84) extend substantially vertically when the lug portions are in the vertical position whereby the catches are adapted to catch hold of a horizontal support (20) on the tower.

11. Apparatus as claimed in any of claims 7 to 10 characterised in that the catch means comprises first and second tower catches, generally in the form of hooks, the first hoist line fastener (46) being in front of the first tower catch (50; 82) and the second hoist line fastener (48) being in front of the second tower catch (52; 84).

12. Apparatus as claimed in claim 7 characterised in that the hoist line fasteners comprise a front coupling device (515a) and a rear coupling device (515b) and said catch means comprises a front tower catch (575) towards the front end of said elongate member (572) and a rear tower catch (576) on said member between said front and rear coupling devices, said coupling devices (515a, 515b) and tower catches (575, 576) being releasably clamped to said member (572) and thereby adapted to be rotated to any angular position and located at a selected position along said member (572).

13. Apparatus as claimed in claim 12 characterised in that said front tower catch (575) is positioned forwardly of the front coupling device (515a) at the forward end of the elongate member (572) and includes a rearwardly and downwardly inclined arm (575b) adapted to rest on and engage a horizontal support (20) of a tower (14) and be held in place by the tension on the line (30).

14. Apparatus as claimed in claim 12 or 13 characterised in that each coupling device (515a, 515b) includes pivot means (517) pivotally connected to the elongate member (572) and arranged to pivot about a longitudinal axis between a first position and a second position, said pivot means defining an internal receiving area (524) for said hoist line (542), said pivot means having an elongate shank portion (521) pivotally connected at one end to the member (572) and a retainer portion (522) extending beyond said shank portion opposite said pivotal connection for receiving the hoist line whereby, after the hoist line is passed into said receiving area with an end member (543) thereof below said pivot means (517) and said hoist line is moved into said retainer portion, the upward movement of said end member (543) against the retainer portion by upward forces applied to said hoist line (542) raises the pivot means (517) to the second position, forming a connection between said hoist line and pivot means (517).

15. Apparatus as claimed in claim 14 characterised in that said pivot means (517) is in the form of a single hook-like pivot member and has an outwardly flared end portion (523) opposite its pivotal connection to the elongate member (572) to facilitate the movement of the hoist line (542) into the retainer portion (522).

16. Apparatus as claimed in claim 14 or 15 characterised said end member (543) is in the form of a ball forming a weight at the lower end of the hoist line (542).

17. Apparatus as claimed in any of claims 14 to 16 characterised in that upon supporting of the elongate member (572) by other than the hoist line (542), the pivot member (517) automatically returns to the first position whereby the hoist line and end member (543) may be removed from a connection to the pivot member (517) by passage back through said receiving area (524).

**Patentansprüche**

1. Verfahren zum Verlegen einer Leitung (30) über eine Reihe von Masten (14) hinweg, die jeweils eine in Längsrichtung weisende Öffnung haben, ohne die Notwendigkeit für einen seitlichen Zugang zu der Öffnung, wobei das Verfahren umfaßt, daß die Leitung (30) von einem Luftfahrzeug (10) mit Hilfe einer eine Heißleine (54) enthaltenden Einrichtung hängend angeordnet wird, das Luftfahrzeug (10) und die Leitung (30) zu einem Mast weiterbewegt werden, die Leitung in der Nähe einer Seite der Öffnung des Mastes (14) abgestützt wird, die Leitung (30) durch die Öffnung mit Hilfe eines Einführungselementes (42; 572) während der Abstützung auf dieser einen Seite gezogen wird, welches durch die Öffnung geht und mit der Heißleine (54) und der Leitung (30) verbunden ist, wobei das Ziehen der Leitung (30) dadurch erzielt wird, daß die Abstützung von der Heißleine (54) auf dieser einen Seite des Mastes (14) gelöst und die Abstützung wieder auf der anderen Seite des Mastes hergestellt wird, und daß das Luftfahrzeug (10) sich zum nächsten Mast (14) weiterbewegt und die Arbeitsgänge für diesen nächsten Mast und die darauffolgenden Masten wiederholt werden, dadurch gekennzeichnet, daß die Leitung (30) von der Einführungseinrichtung (40; 80; 571) als Gesamtheit zusammen mit der Leitung (30) zwischen den aufeinanderfolgenden Masten (14) beweglich getragen wird, während dessen sie von dem Luftfahrzeug (10) Hilfe der die Heißleine (54) enthaltenden Einrichtung hängend angeordnet ist, und daß die Einführungseinrichtung ein Einführungselement (42; 572) enthält, das starr und derart ausgelegt ist, daß es durch die Öffnung im Mast gedrückt werden kann, wobei die Leitung (30) auf dieser einen Seite eines Mastes (14) durch die Einführungseinrichtung (40; 80, 571) gestützt wird und die Leitung (30) durch die Öffnung in Verlegerichtung mit Hilfe des Einführungselementes (42; 572) gezogen wird, währenddem die Einführungseinrichtung (40; 80; 571) mit Hilfe der Heißleine (54) von dem Luftfahrzeug (10) herabhängt.

2. Verfahren nach Anspruch 1, dadurch gekennzeichnet, daß das Lösen der Abstützung von der Heißleine (54) auf dieser einen Seite des Mastes (14) dadurch erzielt wird, daß die Heißleine (54) von der Einführungseinrichtung (40; 80; 571) gelöst wird, währenddem die Einführungseinrichtung unabhängig von der Heißleine (54) und dem Luftfahrzeug (10) abgestützt wird.

3. Verfahren nach Anspruch 2, dadurch gekennzeichnet, daß die Einführungseinrichtung (40; 80; 571) das Einführungselement (42; 572) und eine Einrichtung (46, 48; 515a, 515b) aufweist, die lösbar mit der Heißleine (54) verbindbar ist, daß die Einführungseinrichtung mit der von dieser getragenen Leitung (30) zu einem Mast (14) auf einer Seite desselben gebracht wird, währenddem sie von dem Luftfahrzeug (10) durch die Heißleine (54) herabhängt, die mit dem Einführungselement (42; 572) verbunden ist, daß die Einführungseinrichtung (40; 80; 571) am Mast (14) mit dem Einführungselement (42; 572) abgestützt wird, das sich durch die Öffnung zu der anderen Seite des Mastes erstreckt, die Heißleine (54) von dem Einführungselement gelöst, zu der anderen Seite des Mastes bewegt und wiederum mit dem Einführungselement verbunden wird, und daß die Einführungseinrichtung (40; 80; 571) und die Leitung (30) durch die Öffnung gezogen werden.

4. Verfahren nach Anspruch 3, dadurch gekennzeichnet, daß das Einführungselement (42; 572) länglich ist und mit Erfassungseinrichtungen (50, 52; 82, 84; 575, 576) versehen ist, die derart ausgelegt sind, daß sie in Eingriff mit dem Mast (14) kommen, wodurch das Einführungselement mit diesem fest verbunden werden kann, während die Heißleine (54) von dem Einführungselement getrennt wird.

5. Verfahren nach Anspruch 4, dadurch gekennzeichnet, daß die Hießleine (54) mit dem Einführungselement (572) an seinem vorderen Ende gekoppelt wird, das Einführungselement (572) an einem Mast (14) dadurch positioniert wird, daß eine vordere Masterfassungseinrichtung (575) hiervon und die Spannung an der Leitung (30) genutzt wird, um das Einführungselement am Mast zu halten, daß die Heißleine (54) von dem vorderen Ende des Einführungselementes (572) gelöst wird und mit dem Einführungselement wiederum an einer Zwischenposition hiervon, bezogen auf die vordere Masterfassungseinrichtung (575) nach hinten liegend gekoppelt, daß das Einführungselement (572) von dem Mast (14) abgenommen wird, das Einführungselement (572) teilweise durch die Mastöffnung eingeführt und in Eingriff mit einer hinteren Masterfassungseinrichtung (576) hiervon am Mast (14) gebracht wird, die Heißleine (54) von der Zwischenposition an dem Einführungselement (572) abgekoppelt und wiederum an dem vorderen Ende hiervon angekoppelt wird, und daß das Einführungselement (572) und die Leitung (30) durch die Mastöffnung gezogen werden.

6. Verfahren nach Anspruch 4, dadurch gekennzeichnet, daß die Heißleine (54) mit dem Einführungselement (42) an einer Zwischenposition verbunden wird, das Einführungselement (42) teilweise durch die Mastöffnung eingeführt und in Eingriff mit einer vorderen Masterfassungseinrichtung (50; 82) mit dem Mast (14) in Eingriff gebracht wird, die Heißleine (54) von der Zwischenposition des Einführungselementes (42) gelöst und wieder mit dem Einführungselement an dem vorderen Ende desselben verbunden wird, das Einführungselement (42) weiter durch die Öffnung eingeführt und in Eingriff mit einer hinteren Masterfassungseinrichtung (52, 84) mit dem Mast (14) gebracht wird, die Heißleine (54) von dem vorderen Ende des Einführungselementes (42) abgekoppelt wird und wiederum an der

8

Zwischenposition desselben angekoppelt wird, und daß das Einführungselement (42) durch die Mastöffnung gezogen wird.

7. Vorrichtung zur ausschließlichen Durchführung des Verfahrens nach einem der vorangehenden Ansprüche, die ein Einführungselement in Form eines länglichen starren Elementes (42; 572), eine Befestigungseinrichtung zum Anbringen einer von einem Luftfahrzeug (10) getragenen Heißleine (54) an dem Element (42; 572), das erste und zweite Heißleinenbefestigungseinrichtungen (46, 48; 515a, 515b) enthält, die in einem Abstand voneinander am Element (42; 572) vorgesehen sind, um das Element mit dem unteren Ende der Heißleine (54) lösbar zu verbinden, und eine Erfassungseinrichtung (50, 52; 82, 84; 575, 576) an dem Element (42; 572) aufweist, um lösbar Teile eines Mastes (14) in Eingriff mit der Erfassungseinrichtungshalterung zu bringen und das Element fest mit dem Mast zu verbinden, nachdem die Heißleine (54) von dem Element gelöst ist.

8. Vorrichtung nach Anspruch 7, dadurch gekennzeichnet, daß jede der Heißleinenbefestigungseinrichtungen (46, 48) einen Ösenabschnitt (60) an einem ringförmigen Grundabschnitt (61) hat, der drehbeweglich an dem länglichen Element (42) gelagert ist, um sich zwischen einer horizontalen Position und einer vertikalen Position zu bewegen, und die ferner Anschläge (62) an dem Element enthält, um die Drehbewegung des Grundabschnittes (61) zwischen diesen Positionen zu begrenzen.

9. Vorrichtung nach Anspruch 8, dadurch gekennzeichnet, daß die Erfassungseinrichtung (50, 52) im wesentlichen horizontal verläuft, wenn die Ösenabschnitte (60) in ihrer vertikalen Position sind, wodurch die Erfassungseinrichtungen so eingerichtet sind, daß sie in Eingriff mit einem vertikalen Mastabschnitt (16) bringbar sind.

10. Vorrichtung nach Anspruch 8, dadurch gekennzeichnet, daß die Erfassungseinrichtung (82, 84) im wesentlichen vertikal verläuft, wenn die Ösenabschnitte in der vertikalen Position sind, wodurch die Erfassungseinrichtungen so eingerichtet sind, daß eine horizontale Abstützung (20) am Mast in erfaßter Lage gehalten wird.

11. Vorrichtung nach einem der Ansprüche 7 bis 10, dadurch gekennzeichnet, daß die Erfassungseinrichtung erste und zweite Masterfassungseinrichtungen, allgemein in Form von Haken, aufweist, daß die erste Heißleinenbefestigungseinrichtung (46) von der ersten Masterfassungseinrichtung (50; 82) nach vorne liegt, und daß die zweite Heißleinenbefestigungseinrichtung (48) von der zweiten Masterfassungseinrichtung (52; 84) nach vorne liegt.

12. Vorrichtung nach Anspruch 7, dadurch gekennzeichnet, daß die Heißleinenbefestigungseinrichtungen eine vordere Kupplungseinrichtung (515a) und eine hintere Kupplungseinrichtung (515b) aufweisen, und daß die Erfassungseinrichtung eine vordere Masterfassungseinrichtung (575) in Richtung des vorderen Endes des länglichen Elementes (572) und eine hintere Masterfassungseinrichtung (576) an dem Element zwischen den vorderen und hinteren Kupplungseinrichtungen aufweist, wobei die Kupplungseinrichtungen (515a, 515b) und die Masterfassungseinrichtungen (575, 576) lösbar an dem Element (572) angeklemmt sind und daher derart ausgelegt sind, daß sie in jede beliebige Winkelposition verdrehbar sind und an einer gewünschten Position längs des Elementes (572) anordenbar sind.

13. Vorrichtung nach Anspruch 12, dadurch gekennzeichnet, daß die vordere Masterfassungseinrichtung (575) von der vorderen Kupplungseinrichtung (515a) am vorderen Ende des länglichen Elementes (572) nach vorne liegt und einen nach hinten und unten geneigten Arm (575b) enthält, der derart ausgelegt ist, daß er auf einer horizontalen Stütze (20) eines Mastes (14) aufliegt und in Eingriff mit demselben ist, sowie durch die Spannung an der Leitung (30) an Ort und Stelle gehalten wird.

14. Vorrichtung nach Anspruch 12 oder 13, dadurch gekennzeichnet, daß jede Kupplungseinrichtung (515a, 515b) eine Schwenkeinrichtung (517) enthält, die schwenkbar mit dem länglichen Element (572) verbunden und derart ausgelegt ist, daß sie um eine Längsachse zwischen einer ersten Position und einer zweiten Position schwenkbar ist, daß die Schwenkeinrichtung einen inneren Aufnahmebereich (524) für die Heißleine (54-2) bildet, daß die Schwenkeinrichtung einen länglichen Schaftabschnitt (521) hat, der schwenkbar an einem Ende mit dem Element (572) verbunden ist, und einen Halteabschnitt (522) hat, der sich über den Schaftabschnitt der Schwenkverbindung gegenüberliegend hinaus erstreckt, um die Heißleine aufzunehmen, wobei nach dem Einlaufen der Heißleine in den Aufnahmebereich mit einem Endelement (543) derselben, das unterhalb der Schwenkeinrichtung (517) liegt, die Heißleine in den Halteabschnitt bewegt wird, die Aufwärtsbewegung des Endelementes (543) gegen den Halteabschnitt durch nach oben auf die Heißleine (54-2) einwirkenden Kräfte die Schwenkeinrichtung (517) zu der zweiten Position gehoben wird, in der eine Verbindung zwischen der Heißleine und der Schwenkeinrichtung (517) gebildet wird.

15. Vorrichtung nach Anspruch 14, dadurch gekennzeichnet, daß die Schwenkeinrichtung (517) in Form eines einzigen hakenähnlichen Schwenkelementes ausgebildet ist und einen sich nach außen erweiternden Endabschnitt (523) hat, der der Schwenkverbindung mit dem länglichen Element (572) gegenüberliegt, um die Bewegung der Heißleine (54-2) in den Halteabschnitt (522) hinein zu unterstützen.

16. Vorrichtung nach Anspruch 14 oder 15, dadurch gekennzeichnet, daß das Endelement (54-3) in Form einer Kugel ausgelegt ist, die ein Gewicht am unteren Ende der Heißleine (54-2) bildet.

17. Vorrichtung nach einem der Ansprüche 14 bis 16, dadurch gekennzeichnet, daß das Schwenkelement (517) automatisch in die erste Position zurückfährt, wenn das längliche Element (572) durch andere Mittel als die Heißleine (54-2) gestützt wird, wobei die Heißleine und das Endelement (543) von einer Verbindung mit dem Schwenkelement (517) dadurch gelöst werden kann, daß es durch den Aufnahmebereich (524) zurückgeführt wird.

## Revendications

1. Procédé pour la pose d'un câble (30) à travers une série de pylönes (14), chaque plyöne posédant une ouverture dirigée dans le sens longitudinal, sans nécessité d'accéder latéralement à l'ouverture, ledit procédé comportant les phases consistant à suspendre le câble (30) à partir d'un aéronef (10) par des moyens comprenant un câble de levage (54), à faire avancer l'aéronef (10) et le câble (30) jusqu'à un pylöne, à supporter le câble à proximité d'un premier côté de l'ouverture dudit pylöne (14), à tirer le câble (30) à travers l'ouverture à l'aide d'un élément d'enfilement (42; 572) qui passe à travers l'ouverture et qui est relié au câble de levage (54) et au câble (30) tout en étant supporté par ledit premier côté, une telle traction du câble (30) étant effectuée en détachant un support du câble de levage (54) se trouvant sur le premier côté du pylöne (14) et en rattachant un tel support se trouvant sur l'autre côté du pylöne, à faire avancer l'aéronef (10) jusqu'au pylöne suivant (14) et à répéter l'opération pour un tel pylöne suivant et pour des pylönes successifs, caractérisé en ce que le câble (30) est porté par un dispositif d'enfilement (40; 80; 571) qui est déplaçable dans son entier avec le câble (30) entre des pylönes successifs (14) tout en étant suspendu à l'aéronef (10) par des moyens comprenant le câble de levage (54), le dispositif d'enfilement comprenant l'élément d'enfilement (42; 572) qui est rigide et adapté de façon à être poussé à travers l'ouverture des pylönes, en ce que le câble (30) est supporté sur le premier côté du pylöne (14) par le dispositif d'enfilement (40; 80; 571), et en ce que le câble (30) est tiré à travers l'ouverture dans la direction de la pose à l'aide de l'élément d'enfilement (42; 572) lorsque le dispositif d'enfilement (40; 80; 571) est suspendu à l'aéronef (10) à l'aide du câble de levage (54).

2. Procédé suivant la revendication 1, caractérisé en ce que le détachement du support du câble de levage (54) se trouvant du premier côté du pylöne (14) est effectué en détachant le câble de levage (54) du dispositif d'enfilement (40; 80; 571) lorsque celui-ci est supporté indépendamment du câble de levage (54) et de l'aéronef (10).

3. Procédé suivant la revendication 2, caractérisé en ce que le dispositif d'enfilement (40; 80; 571) comprend l'élément d'enfilement (42; 572) et des moyens (46, 48; 515a, 515b) disposés sur l'élément d'enfilement et qui peuvent être reliés de façon détachable au câble de levage (54), le dispositif d'enfilement avec le câble (30) porté par celui-ci est présenté sur un premier côté d'un pylöne (14) tout en étant suspendus à l'aéronef (10) par le câble de levage (54) relié à l'élément d'enfilement (42; 572), le dispositif d'enfilement (40; 80; 571) est supporté sur le pylöne (14) avec l'élément d'enfilement (42; 572) s'étendant à travers l'ouverture vers le second côté du pylöne, le câble de levage (54) est détaché de l'élément d'enfilement, amené du second côte du pylöne et rattaché à l'élément d'enfilement, et en ce que le dispositif d'enfilement (40; 80; 571) et câble (30) sont tirés à travers l'ouverture.

4. Procédé suivant la revendication 3, caractérisé en ce que l'élément d'enfilement (42; 572) est allongé et pourvu d'éléments preneurs (50, 52; 82, 84; 575, 576) adaptés afin de venir au contact du pylöne (14) de façon que l'élément d'enfilement puisse ëtre fixé à celui-ci lorsque ledit câble de levage (54) est enlevé de l'élément d'enfilement.

5. Procédé suivant la revendication 4, caractérisé en ce qu'on relie le câble de levage (54) à l'extrémité avant de l'élément d'enfilement (572); on positionne l'élément d'enfilement (572) sur un pylöne (14) en utilisant un élément ayant preneur de pylöne (575) de l'élément d'enfilement et la tension du câble (30) afin de retenir l'élément d'enfilement sur le pylöne; on enlève le câble de levage (54) de ladite extrémité avant de l'élément d'enfilement (572) et on le rattache à l'élément d'enfilement dans une position intermédiaire de celui-ci disposée en arrière de l'élément avant preneur de pylöne (575); on détache l'élément d'enfilement (572) du pylöne (14); on enfile partiellement l'élément d'enfilement (572) à travers l'ouverture du pylöne et on met au contact du pylöne (14) un élément arrière preneur de pylöne (576) de l'élément d'enfilement; on détache le câble de levage (54) de la position intermédiaire sur l'élément d'enfilement (572) et on le rattache à l'extrémité avant de celui-ci, et on tire l'élément d'enfilement (572) et le câble (30) à travers l'ouverture du pylöne.

6. Procédé suivant la revendication 4, caractérisé en ce qu'on relie le câble de levage (54) à l'élément d'enfilement (42) à une position intermédiaire de celui-ci; on enfile partiellement l'élément d'enfilement (42) à travers l'ouverture du pylöne et on met au contact du pylöne (14) un élément avant preneur de pylöne (50; 82) de l'élément d'enfilement; on détache le câble de levage (54) de la position intermédiaire de l'élément d'enfilement (42) et on le rattache à l'extrémité avant de l'élément d'enfilement; on enfile l'élément d'enfilement (42) encore plus à travers l'ouverture et on met au contact du pylöne (14) un élément arrière preneur de pylöne (52; 84) de l'élément d'enfilement; on détache le câble de levage (54) de l'extrémité avant de l'élément d'enfilement (42) et on le rattache à la position intermédiaire de celui-ci; et on tire l'élément d'enfilement (42) à travers l'ouverture du pylöne.

7. Dispositif destiné uniquement à la mise en oeuvre du procédé suivant l'une quelconque des revendications précédentes comprenant un élément d'enfilement sous forme d'un organe allongé rigide (42; 572), des moyens de fixation pour attacher un câble de levage (54) porté par un aéronef audit organe (42; 572) comprenant un premier et un second élément de fixation d'un câble de levage (46, 48; 515a, 515b) espacés l'un de l'autre sur ledit organe (42; 572) afin de relier ledit organe de façon détachable à l'extrémité inférieure dudit câble de levage (54), et des moyens preneurs (50, 52; 82, 84; 575 et 576) disposés sur ledit organe (42; 572) destinés à venir au contact de façon détachable de parties d'un pylône (14) afin de le saisir fermement et fixer ledit organe au pylône après le détachement dudit câble de levage (54) dudit organe.

8. Appareil suivant la revendication 7, caractérisé en ce que chacun des éléments de fixation du câble de levage (46, 48) est pourvu d'une partie formant oeillet (60) disposée sur une partie de base annulaire (61) montée rotative sur ledit organe allongé (42) de manière à pouvoir être déplacée entre une position horizontale et une position verticale et comportant en outre des butées (62) disposées sur ledit organe afin de délimiter le mouvement de rotation de ladite partie de base (61) entre lesdites positions.

9. Dispositif suivant la revendication 8, caractérisé en ce que les moyens preneures (50, 52) s'étendent pratiquement horizontalement lorsque lesdites parties formant oeillet (60) sont dans leur position verticale, les moyens preneurs étant adaptés pour venir au contact d'une partie verticale de pylône (16).

10. Dispositif suivant la revendication 8, caractérisé en ce que les moyens preneurs (82, 84) s'étendent pratiquement verticalement lorsque les parties formant oeillet sont dans leur position verticale, les moyens preneurs étant alors adaptés pour saisir fermement un support horizontal (20) du pylône.

11. Dispositif suivant l'une quelconque des revendications 7 à 10, caractérisé en ce que les moyens preneurs comprennent un premier et un second éléments preneurs de pylône, généralement sous forme de crochets, le premier élément de fixation du câble de levage (46) étant disposé en avant du premier élément preneur de pylône (50; 82) et le second élément de fixation du câble de levage (48) étant disposé en avant du second élément preneur de pylône (52; 84).

12. Dispositif suivant la revendication 7, caractérisé en ce que les élément de fixation du câble de levage comprennent un dispositif de liaison ayant (515a) et un dispositif de liaison arrière (515b) et en ce que lesdits moyens preneurs comprennent un élément avant preneur de pylône (575) disposé à proximité de l'extrémité avant dudit organe allongé (572) et un élément arrière preneur de pylône (576) disposé sur ledit organe entre lesdits dispositifs de liaison avant et arrière, lesdits dispositifs de liaison (515a, 515b) et les éléments preneurs de pylône (575, 576) étant montés de façon détachable sur ledit organe (572) et adaptés de façon à pouvoir être tournés dans une position angulaire quelconque et disposés dans une position sélectionnée le long dudit organe (572).

13. Dispositif suivant la revendication 12, caractérisé en ce que ledit élément avant preneur de pylône (75) est disposé en avant du dispositif de liaison avant (515a) à l'extrémité avant de l'organe allongé (572) et comprend un bras (575b) incliné vers l'arrière et vers le bas adapté pour s'appuyer sur et venir au contact d'un support horizontal (20) d'un pylône (14) et pour être maintenu en place par la tension du câble (30).

14. Dispositif suivant la revendication 12 ou 13, caractérisé en ce que chacun des dispositifs de liaison (515a, 515b) comprend des moyens de pivotement (517) reliés à pivotement à l'organe allongé (572) et agencés de façon à pivoter autour d'un axe longitudinal entre une première position et une seconde position, lesdits moyens de pivotement définissant une zone interne de réception (524) dudit câble de levage (542), lesdits moyens de pivotement étant pourvus d'une partie allongée formant tige (521) dont l'une des extrémités est reliée à pivotement à l'organe (572) et une partie de retenue (522) s'étandant audelà de ladite partie formant tige à l'opposé de ladite liaison de pivotement afin de recevoir le câble de levage de manière que, après que le câble de levage soit passé dans ladite zone de réception avec un organe d'extrémité (543) du câble se trouvant au-dessous desdits moyens de pivotement (517) et que ledit câble de levage soit déplacé dans ladite partie de retenue, le déplacement vers le haut dudit organe d'extrémité (543) contre la partie de retenue dû aux forces dirigées vers le haut et appliquées audit câble de levage (542) redresse les moyens de pivotement (517) dans leur seconde position de façon à former une liaison entre ledit câble de levage et les moyens de pivotement (517).

15. Dispositif suivant la revendication 14, caractérisé en ce que les moyens de pivotement (517) sont formés d'un seul élément de pivotement sous forme de crochet et sont pourvus d'une partie extrémité èvasée vers l'extérieur (523) à l'opposé de la liaison de pivotement de ceux-ci avec l'organe allongé (572) afin de faciliter le déplacement de câble de levage (542) dans la partie de retenue (522).

16. Dispositif suivant la revendication 14 ou 15, caractérisé en ce que ledit organe d'extrémité (543) est sous forme d'une bille formant un poids à l'extrémité inférieure du câble de levage (542).

17. Dispositif suivant l'une quelconque des revendications 14 à 16, caractérisé en ce que, lorsque l'organe allongé (572) est supporté autrement que par le câble de levage (542), l'organe de pivotement (517) retourne automatiquement à sa première position de manière que le câble de levage et l'organe d'extrémité (543) puissent être déplacés d'une liaison avec l'élément de pivotement (517) en passant vers l'arrière à travers ladite zone de réception (524).

Fig_1

Fig_2

Fig_3

Fig_4

1

FIG.5

FIG.6

FIG.7

FIG.8

FIG.9

FIG. 10

FIG. 11

FIG. 12

FIG. 13

FIG. 14

0 041 997

FIG. 15

FIG. 16

FIG. 17

4